# EUROPÄISCHE PATENTSCHRIFT

(11) **EP 1 061 400 B1**
(45) Veröffentlichungstag und Bekanntmachung des Hinweises auf die Patenterteilung: **31.03.2004**
(21) Anmeldenummer: 00112798.4
(22) Anmeldetag: 16.06.2000
(51) Int. Cl.: G02C 5/22

(54) **Brillengestell**
Spectacle frame
Monture de lunettes

(30) Priorität: 17.06.1999 DE 29910499 U
(43) Veröffentlichungstag der Anmeldung: 20.12.2000
(73) Patentinhaber: Uphoff, Heinrich, D-48336 Sassenberg (DE)
(72) Erfinder: Uphoff, Heinrich, D-48336 Sassenberg (DE)
(74) Vertreter: Habbel, Hans-Georg, Dipl.-Ing.

(56) Entgegenhaltungen:
- EP-A- 0 067 110
- DE-C- 4 339 517
- FR-A- 2 725 046

## Beschreibung

Die Erfindung betrifft ein Brillengestell gemäß dem Oberbegriff des Hauptanspruches.

Aus der gattungsbildenden DE 43 39 517 "Brillengestell mit Bügelgelenk" ist ein Brillengestell bekannt, bei dem es aufgrund eines besonderen Gelenkes möglich ist, den Brillenbügel in bekannter Art und Weise einzuschwenken. Es ist jedoch auch möglich, den Brillenbügel aus seiner mittleren (Trage)Position horizontal in eine nach außen gebogene Position zu verbringen und es ist möglich, den Brillenbügel vertikal in seiner mittleren Trageposition nach oben und unten zu bewegen. Hierdurch wird zum einen der Tragekomfort der Brille erhöht und zudem wird bei einer Belastung des Brillenbügels ein sofortiger Bruch des Schamieres des Brillenbügels verhindert.

Bei dem in dieser DE 43 39 517 beschriebenen Brillengestell wird als Gelenk zwischen dem Anschlußstück, das auf dem glasseitigen Schamierende angeordnet ist und zwischen dem Brillenbügel ein Halteschaft verwendet, der an seinem einen Ende eine Gelenkkugel aufweist, die in einer durchbohrten Gelenkpfanne des brillenseitigen Anschlußstückes gelagert ist und das freie Ende des Halteschaftes ist am Brillenbügel unter Zwischenschaltung einer Feder festgelegt.

Bei dieser Gelenkart ist nachteilhaft, daß es sich um eine recht komplizierte Art und Weise eines Brillenbügelgelenkes handelt, die aufgrund der Form des Gelenkes recht aufwendig in der Herstellung ist, wodurch die Herstellungskosten steigen. Zudem ist die Art und Weise des Zusammensetzens recht kompliziert.

Der Erfindung liegt die Aufgabe zugrunde, ein Gelenk für Brillengestelle zu schaffen, das zum einen eine horizontale als auch vertikale Beweglichkeit des Brillenbügels ermöglicht, ohne daß ein Gelenkbruch zu befürchten ist und das die Herstellungskosten des Brillenbügelgelenkes gegenüber dem Stand der Technik deutlich reduziert.

Diese der Erfindung zugrundeliegende Aufgabe wird durch die Lehre des kennzeichnenden Teiles des Hauptanspruches gelöst.

Mit anderen Worten ausgedrückt wird ein Gelenk für ein Brillengestell vorgeschlagen, bei dem der Halteschaft, der den Brillenbügel mit dem glasseitigen Anschlußstück verbindet, über eine Drehachse befestigt ist, die zum einen eine horizontale Schwenkbarkeit des Brillenbügels ermöglicht und zusätzlich wird aufgrund der Weite der Bohrung des Halteschaftes, im folgender auch als Ausnchmung der Halteschaft bezeichnet, für die Achse eine vertikale Beweglichkeit des Halteschaftes und des damit verbundenen Brillenbügels nach oben und nach unten ermöglicht.

In dem unabhängigen Hauptanspruch 2 wird ebenfalls ein Gelenk für ein Brillengestell vorgeschlagen, bei dem der den Brillenbügel und den glasseitigen Anschlußblock verbindende Halteschaft wiederum über eine Drehachse befestigt ist, die eine horizontale Schwenkbarkeit des Halteschaftes ermöglicht und zudem ist in diesem Ausführungsbeispiel die Achse flexibel ausgebildet, so daß sich bei einem Druck auf den Brillenbügel diese flexible Drehachse verformen kann und daher der Brillenbügel vertikal nach oben bzw. unten beweglich ausgebildet ist.

Vorteilhafte Ausgestaltungen der Erfindung sind in den Unteransprüchen erläutert.

In vorteilhafter Ausgestaltung ist die Achse als Schraube ausgebildet, so daß die Achse einfach zu montieren ist und bei einem Achsenbruch kann diese in einfacher Form ausgewechselt werden.

In vorteilhafter Ausgestaltung der Erfindung ist die Achse im glasseitigen Anschlußblock angeordnet, um diesen klein ausbilden zu können.

Es ist vorteilhaft, wenn der Aufnahmeraum für den Halteschaft im Bereich der Achse weiter ausgebildet ist als der Halteschaft selbst, zugunsten einer Beweglichkeit des Halteschaftes insbesondere in vertikaler Richtung.

Es ist vorteilhaft, wenn der Halteschaft zumindest teilweise flexibel ausgebildet ist, z. B. als Federstab, um hierdurch eine besondere Flexibilität des Gelenkes bzw. des am Gelenk angeordneten Brillenbügels zu erhalten.

In vorteilhafter Ausgestaltung sind die Innenwandungen des Aufnahmeraumes des Halteschaftes derart ausgerichtet, daß sie parallel zu dem aus seiner mittleren Ruheposition herausbewegten Halteschaft ausgebildet sind, um eine möglichst große Anlagefläche für den vertikal bis zum Anschlag nach oben bzw. nach unten gedrückten Halteschaft zu bieten.

In vorteilhafter Ausgestaltung ist die Ausnehmung des Halteschaftes für die Achse offen ausgebildet, um die Montage des Halteschaftes an die Achse zu erleichtern, insbesondere dann, wenn die Achse nicht als Schraube ausgebildet ist, sondern z. B. als gewindeloser Bolzen od. dgl.

In vorteilhafter Ausgestaltung wird eine Aufnahmehülse verwendet, die das freie Ende des Halteschaftes aufnimmt, wobei diese Aufnahmehülse lösbar mit dem Brillenbügel bzw. mit einem Grundelement verbunden ist, um hierdurch die Montage oder Wartungsarbeiten zu erleichtern.

Ausführungsbeispiele der Erfindung werden in den nachfolgenden Zeichnungen beschrieben, wobei
- Fig. 1: einen Querschnitt durch ein Brillengelenk zeigt,
- Fig. 2: zeigt einen Querschnitt durch ein Brillengelenk, wobei der Brillenbügel aus seiner Mittelposition heraus nach oben bewegt ist,
- Fig. 3: zeigt in einem schematischen Querschnitt ein Brillengelenk in einer weiteren Ausführungsform, wobei der Brillenbügel aus seiner Mittelposition heraus nach unten bewegt ist,
- Fig. 4: veranschaulicht in einer seitlichen Ansicht ein Ausführungsbeispiel eines Brillengelenkes,
- Fig. 5: zeigt in einem Querschnitt eine weitere Ausführungsform eines Brillengelenkes,
- Fig. 6: zeigt in einer Draufsicht das Brillengelenk gemäß Fig. 5,
- Fig. 7: zeigt in einer Ausschnittsdarstellung die Ansicht eines achsseitigen Endes eines Halteschaftes,
- Fig. 8: zeigt in einer Detailzeichnung ein achsseitiges Ende eines Halteschaftes in einer Draufsicht und
- Fig. 9: zeigt in einem Querschnitt eine weitere Ausführungsform eines Brillengelenkes.

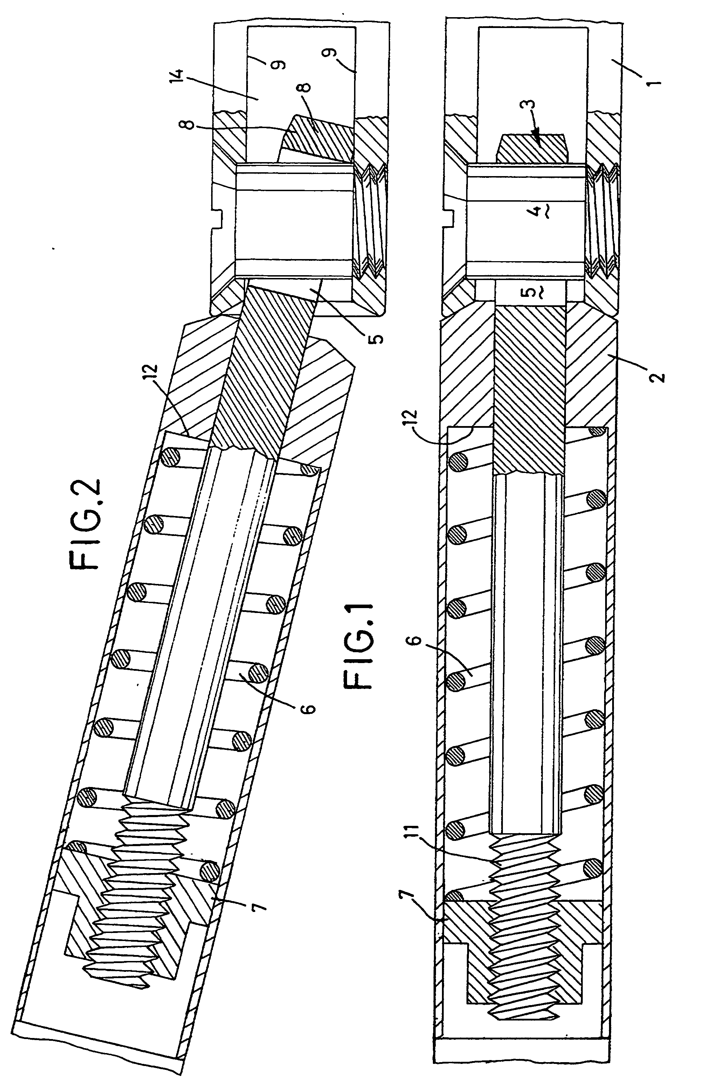

Bezugnehmend auf Fig. 1 ist in einem Querschnitt ein Brillengelenk dargestellt, wobei ein Anschlußstück 1 an der Seite eines Brillengelenkes angeordnet ist, das glasseitig vorgesehen ist. Ein Brillenbügel 2 ist über einen Halteschaft 3 mit dem glasseitigen Anschlußstück 1 verbunden. Dieser Halteschaft 3 weist eine Ausnehmung 5 auf, durch die eine Schraube 4 als Drehachse geführt ist, wobei anstatt einer Schraube 4 z. B. ein gewindeloser Bolzen verwendet werden kann oder sonstige Einrichtungen, um in Ausnehmungen des Halteschaftes 3 einzugreifen, um den Halteschaft 3 an seiner gewünschten Position zu halten. Die verwendete Schraube 4 hat jedoch den Vorteil, daß sie zum einen leicht montierbar ist und bei einem Bruch auch leicht ersetzbar ist. Die Schraube 4, die hier als Drehachse dient, ist starr ausgebildet. Es ist jedoch auch möglich, die verwendete Achse aus besonders flexiblen Materialien herzustellen, um eine besondere Flexibilität des Gelenkes bzw. des daran angeordneten Brillenbügels 2 zu erreichen, so daß es dann nicht unbedingt erforderlich ist, die Ausnehmung des Halteschaftes 3 deutlich größer auszubilden als den Achsdurchmesser.

Die Ausnehmung 5 des Halteschaftes 3 für die Achse ist in diesem Ausführungsbeispiel weiter ausgebildet als es dem Durchmesser bzw. der Weite der verwendeten Achse [in diesem Ausführungsbeispiel der Schraube 4] entspricht, um zu erreichen, daß der Halteschaft 3 nicht nur waagerecht um diese Achse bzw. Schraube 4 herum gedreht werden kann, um den Brillenbügel 2 horizontal zu schwenken, sondern aufgrund dieser Weite der Ausnehmung 5 ist eine vertikale Bewegung des Brillenbügels nach oben (vergl. Fig. 2) bzw. nach unten ermöglicht, d. h. aufgrund der Weite der Ausnehmung 5 kann der Halteschaft 3 an der Achse bzw. hier in diesem Ausführungsbeispiel an der Schraube 4 gekippt werden. Der Halteschaft 3 kann über seinen Verlauf eine gleichmäßige Stärke haben, er kann aber auch Ausnehmungen aufweisen oder Verbreiterungen, z. B. im Bereich der Ausnehmung 5.

Im weiteren Verlauf des Halteschaftes in Richtung Brillenbügel 2 weist der Halteschaft 5 ein Endgewinde 11 auf, auf dem eine Schraubvorrichtung 7 aufschraubbar ist, um eine Feder 6 vorzuspannen. Die Feder 6 drückt auf eine gelenkseitige Schulter 12 des Brillenbügels 2 und bewirkt, daß das gelenkseitige Ende des Brillenbügels gegen die Stirnseite des Anschlußstückes 1 gepreßt wird. Da in diesem Ausführungsbeispiel die Stirnseite des Anschlußstückes 1 konkav ausgebildet ist und die Stirnseite des Brillenbügels 2 in entsprechender Form konvex ausgebildet ist, bewirkt die Federspannung, daß der Brillenbügel stets in seiner mittleren Trageposition an dem Anschlußstück 1 positioniert wird. Nur bei einem Druck des Brillenbügels 2 nach oben oder unten gerät der Brillenbügel gegen die Wirkung des gewählten Federelementes aus dieser mittleren Position und z. B. wenn der Druck den Brillenbügel nach oben bewegt, ergibt sich die Darstellung entsprechend Fig. 2. Wenn der Druck anschließend nachläßt, gerät aufgrund der Federwirkung der Brillenbügel wieder in die mittlere Position, die in Fig. 1 dargestellt ist. Aufgrund der Weite der Ausnehmung ist ein Kippen des von der Achse gehaltenen Halteschaftes 3 nach oben bzw. nach unten möglich.

Die Endungen 8 des Halteschaftes sind abgeschrägt ausgebildet, so daß, wenn der Halteschaft aus seiner mittleren Position herausgerät, die Endungen des Halteschaftes flächig auf den Innenwandungen 9 eines Aufnahmeraumes 14 anliegen, um somit die Hebelkräfte, die auf den Brillenbügel einwirken, möglichst großflächig abzuleiten.

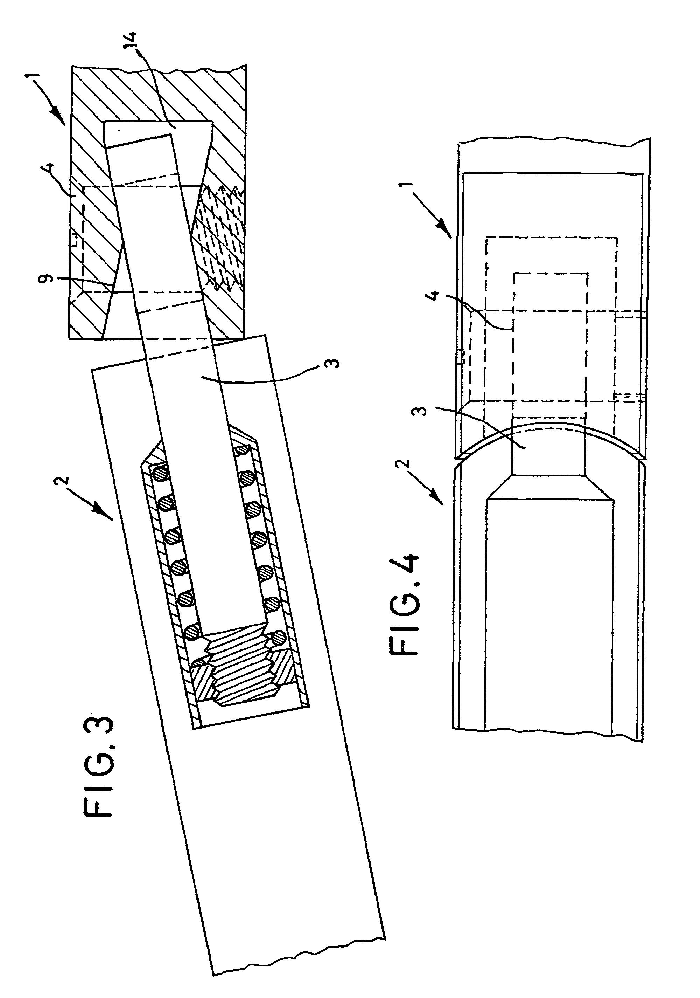

Entsprechend Fig. 3 ist ein weiteres Ausführungsbeispiel eines Brillengelenkes dargestellt, wobei in diesem Ausführungsbeispiel die jeweiligen zueinanderweisenden Stirnseiten des Anschlußstückes 1 und des Brillenbügels 2 senkrecht voreinander verlaufen. Wenn die beiden Stirnseiten voreinanderstehen, ist die normale Trageposition der Brille gegeben. Wenn aber z. B. der Brillenbügel nach unten gedrückt wird, ergibt sich die Position gemäß Fig. 3.

Wiederum ist als Halteachse für den Halteschaft 3 eine Schraube 4 verwendet, und die Innenwandungen 9 des Aufnahmeraumes 14 für den Halteschaft im Anschlußstück 1 sind in diesem Ausführungsbeispiel parallel zu dem Halteschaft ausgebildet, der bis zu seiner oberen bzw. unteren Begrenzung herausbewegt ist. Auch durch diese Maßnahme wird ein möglichst großflächiges Anliegen des Halteschaftes an den Innenwandungen des Aufnahmeraumes 14 erreicht, wenn der Halteschaft bis zum oberen bzw. unteren Anschlag heraus bewegt ist. Auch hierdurch wird eine besonders stabile Konstruktion erreicht und ein Verbiegen des Halteschaftes bzw. ein "Ausleiern" des Brillengelenkes wird auch bei häufigem Gebrauch vermieden. Die Endungen des Halteschaftes 8 können in diesem Ausführungsbeispiel gerade ausgebildet sein.

Bezugnehmend auf Fig. 4 ist eine Seitenansicht eines Brillengelenkes dargestellt, wobei in diesem Ausführungsbeispiel verdeutlicht wird, daß die zueinander gerichteten Stirnseiten von Anschlußstück 1 und Brillenbügel 2 z. B. halbrund bzw. konvexlkonkav ausgebildet sein können, um eine Positionierung des Brillenbügels 2 in der mittleren Trageposition zu erreichen.

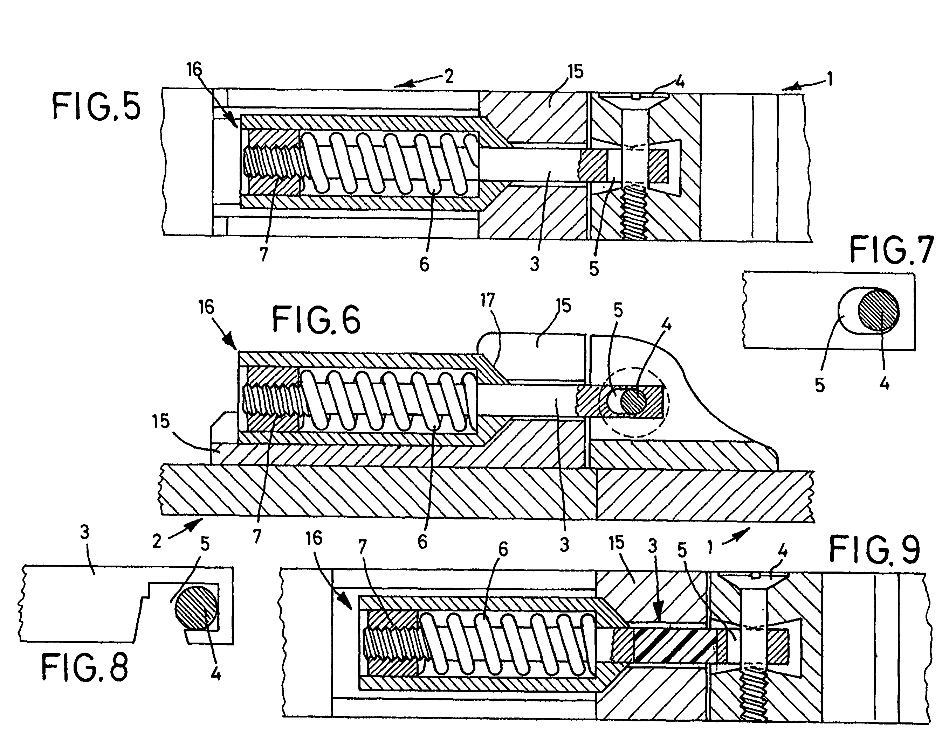

In Fig. 5 ist ein weiteres Ausführungsbeispiel des glasseitigen Anschlußstückes 1 und des Brillenbügels 2 in einer Seitenansicht dargestellt und in Fig. 6 in einer Draufsicht. Bei diesem Brillengelenk, das wiederum mit einem Halteschaft 3 und einer als Drehachse dienenden Schraube 4 betrieben wird sowie der bereits erwähnten Feder 6 und einem entsprechenden Schraubstück 7 wird ein Grundelement 15 verwendet, das am Brillenbügel 2 befestigt wird und auf diesem Grundelement 15 kann eine Schamierhülse 16 befestigt werden, wobei die Scharnierhülse 16 in diesem Ausführungsbeispiel das freie Ende des Halteschaftes 3 mitsamt Feder 6 und Schraubvorrichtung 7 aufnimmt. Die Schamierhülse 16 kann z. B. lösbar auf dem Grundelement 15 befestigt sein und es ist möglich, z. B. über eine Schwalbenschwanzführung, diese Schamierhülse 16 auf das Grundelement 15 aufzuschieben, bis der vordere Bereich der Schraubhülse 16 an eine Anlageschulter 17 des Grundelementes 15 stößt. Sowohl der vordere Bereich der Schamierhülse 16 und die Anlageschulter 17 des Grundelementes weisen eine Öffnung auf, durch die der Halteschaft hindurchragen kann. Diese Ausführungsform des Grundelementes mitsamt der Schamierhülse hat den Vorteil, daß ein besonders schnelles Montieren dieses Brillengelenkes ermöglicht wird, und ebenfalls wird eine Reparatur oder eine Reinigung des Brillenscharnieres ohne großen Aufwand hierdurch möglich.

Fig. 7 zeigt in einer Draufsicht den achsseitigen Bereich eines Halteschaftes 3, und es wird deutlich, daß die Ausnehmung 5 größer ausgebildet ist als die in diesem Ausführungsbeispiel stabförmige Achse der Schraube 4. Dabei ist die Ausnehmung 5 in diesem Ausführungsbeispiel als Langloch ausgebildet.

Aus Fig. 8 ist wiederum in einer Aufsicht ein achsseitiges Ende des Halteschaftes 3 ersichtlich, wobei in diesem Ausführungsbeispiel die Ausnehmung 5 offen ausgebildet ist, so daß der Halteschaft an die Achse - in diesem Fall Schraube 4 - angelegt werden kann, ohne daß ein Lösen der Achse erforderlich ist. Dieses Ausführungsbeispiel ist also dann vorteilhaft, wenn die Achse unlösbar befestigt ist.

In Fig. 9 ist ein weiteres Ausführungsbeispiel eines Brillengelenkes in einem Querschnitt dargestellt, wobei in diesem Ausführungsbeispiel der Halteschaft 3 in einem Teilbereich als Federstab ausgebildet ist, d. h. der Halteschaft 3 kann zumindest teilweise leicht biegbar ausgebildet sein aufgrund der für den Halteschaft verwendeten Materialien bzw. deren Form, d. h. der Halteschaft kann z. B. aus Gummi oder Kunststoff bestehen oder aus leicht biegsamem Metall.

## Patentansprüche

1. Brillengestell mit Bügeln, die jeweils über ein Gelenk mit einem glasseitigen Anschlußstück verbunden sind, wobei im Bereich des Gelenkes die Verbindung des Brillenbügels und des Anschlußstückes über einen Halteschaft erfolgt, der an seinem Ende an dem einen zuvor genannten Brillengestellelement schwenkbar fixiert ist und dessen anderes Ende mit dem anderen, zuvor genannten Brillengestellelement verbunden ist, dergestalt, daß eine horizontale Schwenkbarkeit des vom Gelenk gehaltenen Brillenbügels ermöglicht wird, wie auch eine vertikale Beweglichkeit, **dadurch gekennzeichnet, daß** der Halteschaft (3), der im Gelenkbereich eine Ausnehmung aufweist, durch die eine Achse führt, die im wesentlichen senkrecht zur horizontalen Schwenkbarkeit des Brillenbügels ausgebildet ist, wobei die Innenweite der Ausnehmung (5) größer ist als der Durchmesser der Achse zuzugunsten einer vertikalen Beweglichkeit des Halteschaftes (3) an der Achse.

2. Brillengestell mit Bügeln, die jeweils über ein Gelenk mit einem glasseitigen Anschlußstück verbunden sind, wobei im Bereich des Gelenkes die Verbindung des Brillenbügels und des Anschlußstückes über einen Halteschaft erfolgt, der an seinem Ende an dem einen zuvor genannten Brillengestellelement schwenkbar fixiert ist und dessen anderes Ende mit dem anderen zuvor genannten Brillengestellelement verbunden ist, dergestalt, daß eine horizontale Schwenkbarkeit des vom Gelenk gehaltenen Brillenbügels ermöglicht wird, wie auch eine vertikale Beweglichkeit, **dadurch gekennzeichnet, daß** der Halteschaft (3), der im Gelenkbereich eine Ausnehmung (5) aufweist, durch die eine Achse führt, die im wesentlichen senkrecht zur horizontalen Schwenkbarkeit des Brillenbügels (2) angeordnet ist, wobei die Achse elastisch ausgebildet ist zugunsten einer vertikalen Beweglichkeit des an der Achse gehaltenen Halteschaftes (3).

3. Brillengestell gemäß einem der Ansprüche 1 oder 2, **gekennzeichnet durch** eine Schraube (4) als Achse.

4. Brillengestell gemäß einem der vorhergehenden Ansprüche, **gekennzeichnet durch** die Anordnung der Achse im glasseitigen Anschlußblock (1).

5. Brillengestell gemäß einem der vorhergehenden Ansprüche, **gekennzeichnet durch** einen Aufnahmeraum (14) für den Halteschaft (3) im Bereich der Achse, der weiter als der Halteschaft (3) ausgebildet ist zugunsten einer Beweglichkeit des Halteschaftes (3), insbesondere in vertikaler Richtung.

6. Brillengestell gemäß einem der vorhergehenden Ansprüche, **gekennzeichnet durch** den zumindest teilweise flexibel ausgebildeten Halteschaft (3).

7. Brillengestell gemäß einem der vorhergehenden Ansprüche, **gekennzeichnet durch** die zumindest teilweise parallel zu dem aus seiner mittleren Ruheposition heraus bewegten Halteschaft (3) ausgebildeten Innenwandungen (9) des Aufnahmeraumes (14) zugunsten eines zumindest teilweise flächigen Anliegens des aus seiner mittleren Ruheposition heraus bewegten Halteschaftes (3) an den Innenwandungen (9) des Aufnahmeraumes (14).

8. Brillengestell gemäß einem der vorhergehenden Ansprüche, **gekennzeichnet durch** die einseitig offen ausgebildete Ausnehmung (5), die an der offenen Seite keine Seitenwandung aufweist.

9. Brillengestell gemäß einem der vorhergehenden Ansprüche, **gekennzeichnet durch** eine Scharnierhülse (16) zur Aufnahme des freien Endes des Halteschaftes (3), die lösbar mit einem am Brillenbügel (2) befestigten Grundelement (15) befestigt ist.

10. Brillengestell gemäß einem der vorhergehenden Ansprüche, **gekennzeichnet durch** die hinter der Achse angeordnete Endung (8) des Halteschaftes (3), die im oberen und unteren Bereich abgeschrägt ausgebildet ist zugunsten eines flächigen Abstützens der Endung (8) an der Innenwandung (9) des Aufnahmeraumes bei einem vertikalen Kippen des Halteschaftes (3).

## Claims

1. Spectacles frame with bars each of which is connected by a hinge to a connecting piece on the glass side, on which in the area of the hinge the spectacle bar and the connecting piece are connected via a retaining shaft which at its end is pivotably fixed to one above-mentioned spectacles frame element and the other end of which is connected to the other previously mentioned spectacles frame element, such that a horizontal pivotability of the spectacles bar held by the hinge is enabled and also a vertical moveability, **characterised in that** the retention shaft (3), which incorporates in the area of the hinge a recess, through which an axis runs that is constructed essentially perpendicular to the horizontal pivotability of the spectacles bar, on which the inner clearance of the recess (5) is greater than the diameter of the axis in favour of vertical moveability of the retaining shaft (3).

2. Spectacles frame with bars each of which is connected to connecting piece on the glass side, on which in the area of the hinge the spectacle bar and the connecting piece are connected via a retaining shaft which at its end is pivotably fixed to the one above-mentioned spectacles frame element and the other end of which is connected to the other previously mentioned spectacles frame element, such that a horizontal pivotability of the spectacles bar held by the hinge is enabled and also vertical moveability, **characterised in that** the retention shaft (3), which incorporates in the area of the hinge a recess (5), through which an axis runs that is constructed essentially perpendicular to the horizontal pivotability of the spectacles bar (2), on which the axis is constructed elastically in favour of vertical moveability of the retaining shaft (3) retained in the axis.

3. Spectacles frame in accordance with one of claims 1 or 2, **characterised by** a screw (4) serving as an axle.

4. Spectacles frame in accordance with one of the foregoing claims, **characterised by** the arrangement of the axle in the connecting block (1) on the glass side.

5. Spectacles frame in accordance with one of the foregoing claims, **characterised by** a mounting space (14) for the retaining shaft (3) in the area of the axle, which mounting space is constructed wider than the retaining shaft (3) in favour of moveability of the retaining shaft (3), particularly in a vertical direction.

6. Spectacles frame in accordance with one of the foregoing claims, **characterised by** a retaining shaft (3) which is constructed so as to be at least partly flexible.

7. Spectacles frame in accordance with one of the foregoing claims, **characterised by** the inner walls (9) of the mounting frame (14) constructed at least partly parallel to the retaining shaft (3) which is moved out of its central resting position in favour of an at least partial surface contact between the retaining shaft (3) moved out of its central resting position and the inner walls (9) of the mounting space (14).

8. Spectacles frame in accordance with one of the foregoing claims, **characterised by** the recess (5) constructed so as to be open on one side and incorporating no side wall on the open side.

9. Spectacles frame in accordance with one of the foregoing claims, **characterised by** a hinge sleeve (16) for mounting the free end of the retaining shaft (3) which hinge sleeve is fastened detachably to a basic element (15) fastened to the spectacles frame (2).

10. Spectacles frame in accordance with one of the foregoing claims, **characterised by** the ending (8) of the retaining shaft (3) arranged behind the axle, which ending (8) is constructed so as to be bevelled in the upper and lower area in favour of a broad-surface support of the ending (8) on the inner wall (9) of the mounting space when the retaining shaft (3) is tilted vertically.

## Revendications

1. Monture de lunettes avec branches qui sont reliées chacune via une articulation avec une pièce de raccordement côté verre, sachant que dans la zone de l'articulation, la jonction de la branche et de la pièce de raccordement a lieu via un arbre de retenue immobilisé par son extrémité et de façon pivotante contre l'élément de monture de lunettes précédemment cité, et dont l'autre extrémité est reliée avec l'autre élément de monture de lunettes précédemment cité, de sorte à permettre un mouvement pivotant horizontal de la branche de lunettes retenue par l'articulation ainsi qu'un mouvement vertical, **caractérisée en ce que** l'arbre de retenue (3) présente un évidement dans la zone de l'articulation, traversé par un axe se présentant pour l'essentiel à la verticale du mouvement de pivotement horizontal offert par la branche de lunettes, sachant que le calibre intérieur de l'évidement (5) est supérieur au diamètre de l'axe pour favoriser le mouvement vertical de l'arbre de retenue (3) contre l'axe.

2. Monture de lunettes avec branches qui sont reliées chacune via une articulation avec une pièce de raccordement côté verre, sachant que dans la zone de l'articulation, la jonction de la branche et de la pièce de raccordement a lieu via un arbre de retenue immobilisé par son extrémité et de façon pivotante contre l'élément de monture de lunettes précédemment cité, et dont l'autre extrémité est reliée avec l'autre élément de monture de lunettes précédemment cité, de sorte à permettre un mouvement pivotant horizontal de la branche de lunettes retenue par l'articulation ainsi qu'un mouvement vertical, **caractérisée en ce que** l'arbre de retenue (3) présente un évidement (5) dans la zone de l'articulation, traversé par un axe se présentant pour l'essentiel à la verticale du mouvement de pivotement horizontal offert par la branche (2) de lunettes, sachant que l'axe est configuré de façon élastique pour favoriser un mouvement vertical de l'arbre de retenue (3) maintenu contre l'axe.

3. Monture de lunettes selon l'une des revendications 1 ou 2, **caractérisée par** la présence d'une vis (4) officiant d'axe.

4. Monture de lunettes selon l'une des revendications précédentes, **caractérisée par** l'agencement de l'axe dans le bloc de raccordement (1) côté verre.

5. Monture de lunettes selon l'une des revendications précédentes, **caractérisée par** un volume réceptacle (14) recevant l'arbre de retenue (3) dans la zone de l'axe dont le calibre d'ouverture est plus large que l'arbre de retenue (3) pour que ce dernier (3) puisse se déplacer, notamment dans le sens vertical.

6. Monture de lunettes selon l'une des revendications précédentes, **caractérisée par** l'arbre de retenue (3) configuré au moins en partie de façon flexible.

7. Monture de lunettes selon l'une des revendications précédentes, **caractérisée par** les parois intérieures (9) du volume réceptacle (14), parois dont le tracé est au moins en partie parallèle à l'arbre de retenue (3) déplacé pour lui faire quitter sa position de repos médiane, pour favoriser l'applique d'au moins une partie de la surface de l'arbre de retenue (3) - déplacé pour lui faire quitter sa position de repose médiane - contre les parois intérieures (9) du volume réceptacle (14).

8. Monture de lunettes selon l'une des revendications précédentes, **caractérisée par** l'évidement (5) configuré ouvert d'un côté et qui ne présente pas de paroi latérale du côté ouvert.

9. Monture de lunettes selon l'une des revendications précédentes, **caractérisée par** une douille charnière (16) servant à recevoir l'extrémité libre de l'arbre de retenue (3) et qui a été fixée, de façon détachable, par un élément de base (15) fixé contre la monture de lunettes.

10. Monture de lunettes selon l'une des revendications précédentes, **caractérisée par** la terminaison (8) de l'arbre de retenue (3) située derrière l'axe, cette terminaison présentant une géométrie biseautée dans la zone supérieure et inférieure pour favoriser l'appui de la surface de la terminaison (8) contre la paroi intérieure (9) du volume réceptacle lorsqu'on fait pivoter verticalement l'arbre de retenue (3).
